# EUROPEAN PATENT APPLICATION

(11) **EP 3 674 113 A1**
(43) Date of publication of application: **01.07.2020**
(21) Application number: 18849161.7
(22) Date of filing: 21.08.2018
(51) Int. Cl.: B60G 17/052, B60G 17/015

(54) **LIFT AXLE DEVICE**

(30) Priority: 23.08.2017 JP 2017160132
(71) Applicant: Hino Motors, Ltd., Hino-shi, Tokyo 191-8660 (JP)
(72) Inventor: MOCHIZUKI, Takashi, Hino-shi Tokyo 191-8660 (JP); YOZA, Hiroyuki, Hino-shi Tokyo 191-8660 (JP)
(74) Representative: Kuhnen & Wacker Patent- und Rechtsanwaltsbüro PartG mbB
(86) International application number: PCT/JP2018/030725
(87) International publication number: WO 2019/039443

(57) **Abstract**

This lift axle device comprises: a first air spring which corresponds to a first axle; a second air spring which corresponds to a second axle that reciprocates between a down position and lift position; an air bellows; a pneumatic circuit which has a solenoid valve; and a control circuit. The control circuit controls the supply of electric power to the solenoid valve. If the pressure transitions to less than a first pressure, the second axle is placed in the lift position. If the pressure transitions to at least a second pressure, the second axle is placed in the down position. If the pressure transitions to at least the first pressure and less than the second pressure, the second axle is caused to maintain the position thereof.

## Description

### TECHNICAL FIELD

The present invention relates to a lift axle device capable of lifting and lowering an axle.

### BACKGROUND ART

A lift axle device is installed in, for example, a large-size vehicle of a double-rear-axel type such as a truck. The lift axle device keeps drive wheels corresponding to a first axle on the ground surface. The lift axle device can lift and lower a second axle between a down position, at which its drive wheels are on the ground surface, and a lift position, at which the drive wheels are separated from the ground surface. Patent Document 1 describes an example of a lift axle device that detects the pressure of air in air springs corresponding to the first axle, which cannot be lifted and lowered, using a sensor and automatically lifts and lowers the second axle based on whether the detected pressure exceeds a constant value.

### PRIOR ART DOCUMENTS

### Patent Documents

Patent Document 1: Japanese Laid-Open Patent Publication No. 2002-205524

### SUMMARY OF THE INVENTION

### Problems that the Invention is to Solve

In the configuration in which the axles are automatically lifted and lowered in accordance with the detection value of the above-described sensor, the axles are lifted and lowered very often when the pressure of air vibrates at around the constant value.
It is an objective of the present invention to provide a lift axle device capable of reducing the frequency of lifting and lowering axles.

### Means for Solving the Problem

A lift axle device that solves the above-described problem includes a first air spring corresponding to a first axle to which a first drive wheel that remains on a ground surface is coupled, a second air spring corresponding to a second axle configured to be lifted and lowered between a down position at which a second drive wheel is on the ground surface and a lift position at which the second drive wheel is separated from the ground surface, an air bellows configured to lift and lower the second axle between the down position and the lift position, a pneumatic circuit configured to supply and discharge compressed air to and from the second air spring and the air bellows, the pneumatic circuit including a solenoid valve, a position of the second axle being switched depending on whether power is supplied to the solenoid valve, and a control circuit including a first electrical contact and a second electrical contact that are opened and closed in accordance with pressure of the first air spring. The first electrical contact is configured to be switched between an open state and a closed state at a first pressure of the first air spring. The second electrical contact is configured to be switched between an open state and a closed state at a second pressure of the first air spring that is higher than the first pressure. The control circuit is configured to control supply of power to the solenoid valve by switching the first electrical contact and the second electrical contact between the open state and the closed state in accordance with the pressure of the first air spring. The control circuit is configured to control the supply of power to the solenoid valve such that when the pressure changes to be less than the first pressure, the second air spring is controlled in an air-discharged state and the air bellows is controlled in an air-supplied state to arrange the second axle at the lift position, when the pressure changes to be greater than or equal to the second pressure, the second air spring is controlled in the air-supplied state and the air bellows is controlled in the air-discharged state to arrange the second axle at the down position, and when the pressure changes to be greater than or equal to the first pressure and less than the second pressure, each of the states of the second air spring and the air bellows is maintained in the air-supplied state or the air-discharged state to keep the second axle.

### BRIEF DESCRIPTION OF THE DRAWINGS

Fig. 1A is a diagram showing a state in which a second axle is located at a down position in a vehicle equipped with a lift axle device according to an embodiment.
Fig. 1B is a diagram showing a state in which the second axle is located at a lift position in the vehicle of Fig. 1A.
Fig. 2 is a diagram schematically showing the configuration of the lift axle device of the embodiment.
Fig. 3 is a diagram schematically showing an example of how the lift axle device of Fig. 2 operates in a low-pressure state.
Fig. 4 is a diagram schematically showing an example of how the lift axle device of Fig. 2 operates when the pressure changes from the low-pressure state to a medium-pressure state.
Fig. 5 is a diagram schematically showing an example of how the lift axle device of Fig. 2 operates when the pressure changes from the medium-pressure state to a high-pressure state.
Fig. 6 is a diagram schematically showing an example of how the lift axle device of Fig. 2 operates when the pressure changes from the high-pressure state to the medium-pressure state.
Fig. 7A is a diagram showing changes in the position of the second axle when the pressure changes from the low-pressure state to the high-pressure state.
Fig. 7B is a diagram showing changes in the position of the second axle when the pressure changes from the high-pressure state to the low-pressure state.
Fig. 8 is a schematic diagram of the configuration of a lift axle device according to a modification, showing an example of how the lift axle device operates in the low-pressure state.

### MODES FOR CARRYING OUT THE INVENTION

A lift axle device according to an embodiment will now be described with reference to the drawings.

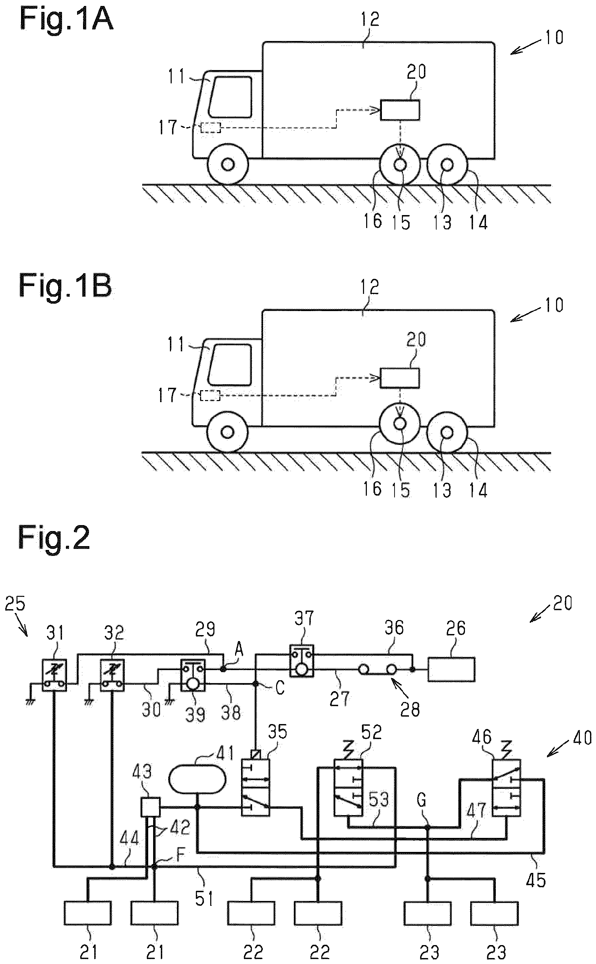

As shown in Figs. 1A and 1B, a vehicle 10 is, for example, a large-size vehicle such as a truck including a cab 11 and a loading platform 12. The vehicle 10 includes two axles arranged in the front-rear direction of the vehicle 10 on the lower side of the loading platform 12 and rear wheels coupled to the two axles. One of the two axles is a first axle 13. First drive wheels 14, which remain on the ground surface, are coupled to the first axle 13. The other one of the two axles is a second axle 15. The second axle 15 can be lifted and lowered between a down position, at which second drive wheels 16 are on the ground surface as shown in Fig. 1A, and a lift position, at which the second drive wheels 16 are separated from the ground surface as shown in Fig. 1B. The second axle 15 is located at the down position when an operation unit 17, which is arranged in the cab 11, is turned off. The second axle 15 can be automatically lifted and lowered in accordance with the load weight between the down position and the lift position when the operation unit 17 is turned on. The second axle 15 is lifted and lowered in such a manner by a lift axle device 20.

As shown in Fig. 2, the lift axle device 20 includes a pair of left and right first air springs 21, a pair of left and right second air springs 22, and a pair of left and right air bellows 23.

The first air springs 21 are arranged between the first axle 13 and a vehicle body frame that supports, for example, the cab 11 and the loading platform 12. Compressed air is supplied to and discharged from the first air springs 21 to cause the first air springs 21 to absorb vibration of the loading platform 12 on the first axle 13 while maintaining the ground clearance of the vehicle 10 at a set ground clearance.

The second air springs 22 are arranged between the vehicle body frame and the second axle 15. The second air springs 22 have an air-supplied state, in which the second air springs 22 are supplied with compressed air, and an air-discharged state, in which compressed air is discharged from the second air springs 22. The second air springs 22 are in the air-supplied state when the second axle 15 is located at the down position. In the air-supplied state, in the same manner as the first air springs 21, the supplying and discharging of compressed air to and from the second air springs 22 are controlled to cause the second air springs 22 to absorb the vibration of the loading platform 12 on the second axle 15 while maintaining the ground clearance of the vehicle 10 at the set ground clearance. The second air springs 22 are in the air-discharged state when the second axle 15 is located at the lift position.

The air bellows 23 are arranged between the vehicle body frame and the second axle 15. The air bellows 23 have an air-supplied state, in which the air bellows 23 are supplied with compressed air, and an air-discharged state, in which compressed air is discharged from the air bellows 23. In the air-supplied state, the air bellows 23 are configured to expand in the vertical direction of the vehicle 10 to allow the second axle 15 to be located at the lift position. In the air-discharged state, the air bellows 23 are configured to contract in the vertical direction of the vehicle 10 to allow the second axle 15 to be located at the down position.

The lift axle device 20 arranges the second axle 15 at the lift position when the second air springs 22 are in the air-discharged state and the air bellows 23 are in the air-supplied state. Further, the lift axle device 20 arranges the second axle 15 at the down position when the second air springs 22 are in the air-supplied state and the air bellows 23 are in the air-discharged state.

The lift axle device 20 includes a control circuit 25 and a pneumatic circuit 40 for switching the position of the second axle 15. The control circuit 25 switches the supply of power to a solenoid valve 35, which is incorporated in the pneumatic circuit 40, between a state in which power is supplied and a state in which power is not supplied in accordance with the pressure P of compressed air in the first air spring 21. In the pneumatic circuit 40, the solenoid valve 35 switches the passages of compressed air. The pneumatic circuit 40 supplies and discharges compressed air to and from the first air springs 21. Further, the pneumatic circuit 40 supplies and discharges compressed air to and from the second air springs 22 and the air bellows 23 in accordance with the state of the solenoid valve 35. In Fig. 2, the electrical circuitry in the control circuit 25 is shown by the fine line, and the flow circuitry is shown by the thick line.

The control circuit 25 includes a main control circuit 27, which is connected to a power supply 26, a first switch circuit 29, which can connect the power supply 26 to ground via the main control circuit 27, and a second switch circuit 30, which can connect the power supply 26 to ground via the main control circuit 27. The first switch circuit 29 and the second switch circuit 30 branch from the main control circuit 27 at an electrical connection point A. In other words, the first switch circuit 29 and the second switch circuit 30 are connected in parallel to the main control circuit 27.

The main control circuit 27 includes a master switch 28, which includes an electrical contact that is closed when the operation unit 17 in the cab 11 is turned on. The first switch circuit 29 includes a first switch 31 (first pressure switch). The second switch circuit 30 includes a second switch 32 (second pressure switch). Each of the first switch 31 and the second switch 32 is a pressure switch including an electrical contact that is opened and closed based on the pressure P of compressed air in the first air springs 21. The first switch 31 is a normally closed pressure switch of which the set pressure is a first pressure P1. The first switch 31 keeps its electrical contact closed when the pressure P is less than the first pressure P1 and keeps its electrical contact open when the pressure P is greater than or equal to the first pressure P1. The second switch 32 is a normally closed pressure switch of which the set pressure is a second pressure P2, which is higher than the first pressure P1. The second switch 32 keeps its electrical contact closed when the pressure P is less than the second pressure P2 and keeps its electrical contact open when the pressure P is greater than or equal to the second pressure P2. It is preferred that, for example, a technician in a repair shop be able to change the set pressure of the first switch 31 and the set pressure of the second switch 32.

The control circuit 25 includes a first drive circuit 36, which can connect the solenoid valve 35 and the power supply 26 to each other, and a first drive relay 37, which opens and closes the first drive circuit 36 in accordance with an energized state of the main control circuit 27. The first drive relay 37 keeps the first drive circuit 36 closed when the main control circuit 27 is in the energized state, thereby supplying power from the power supply 26 to the solenoid valve 35. The first drive relay 37 keeps the first drive circuit 36 open when the main control circuit 27 is in a non-energized state, thereby stopping the supply of power from the power supply 26 to the solenoid valve 35.

The control circuit 25 includes a second drive circuit 38, which branches from an electrical connection point C located between the solenoid valve 35 and the electrical contact of the first drive relay 37 in the first drive circuit 36. The second drive circuit 38 can connect the power supply 26 to ground via the first drive circuit 36. Further, the control circuit 25 includes a second drive relay 39, which opens and closes the second switch circuit 30 independently from the second switch 32 and opens and closes the second switch circuit 30 in accordance with the energized state of the second drive circuit 38. The second drive relay 39 keeps the second switch circuit 30 closed when the second drive circuit 38 is in the energized state and keeps the second switch circuit 30 open when the second drive circuit 38 is in the non-energized state. More specifically, the second drive relay 39 includes an electrical contact arranged on the second switch circuit 30, and the electrical contact of the second drive relay 39 is closed when the second drive circuit 38 is in the energized state and is open when the second drive circuit 38 is in the non-energized state. The state in which power is supplied to the solenoid valve 35 is referred to as an activated state of the solenoid valve 35, and the state in which the supply of power to the solenoid valve 35 is stopped is referred to as a deactivated state of the solenoid valve 35.

The pneumatic circuit 40 includes an air supply source 41, which supplies compressed air having a higher pressure than the second pressure P2 of the second switch 32. The pneumatic circuit 40 includes a first supply-discharge passage 42, which can connect the air supply source 41 and the pair of left and right first air springs 21 to each other. The first supply-discharge passage 42 includes a ground clearance adjustment valve 43, which controls the supplying and discharging of compressed air to and from the first air springs 21 such that the ground clearance of the vehicle 10 is maintained at the set ground clearance. The ground clearance adjustment valve 43 controls the supplying and discharging of compressed air when a lever (not shown), which is coupled to the first axle 13 by a link rod, is mechanically operated as the position of the loading platform 12 relative to the first axle 13 changes. The pressure P of compressed air in the first air springs 21 increases as a first axle weight W1, which is the load acting on the first axle 13, increases.

The pneumatic circuit 40 includes a measurement passage 44, which connects a connection point F to the first switch 31 and the second switch 32. The connection point F is located between the ground clearance adjustment valve 43 and the first air springs 21 in the first supply-discharge passage 42. The first switch 31 and the second switch 32 measure the pressure of compressed air in the measurement passage 44. That is, the first switch 31 and the second switch 32 measure the pressure P of the first air springs 21, which are subject to measurement.

The pneumatic circuit 40 includes a bellows supply-discharge passage 45, which can connect the air supply source 41 to the pair of left and right air bellows 23, a first air activation valve 46, which is arranged on the bellows supply-discharge passage 45, and a first activation pressure passage 47, which can supply activation pressure to the first air activation valve 46.

The bellows supply-discharge passage 45 is connected to the pair of left and right air bellows 23. More specifically, the bellows supply-discharge passage 45 branches into two between the first air activation valve 46 and the pair of left and right air bellows 23, and the branched bellows supply-discharge passages 45 are respectively connected to the pair of left and right air bellows 23. The first air activation valve 46 is in the activated state when supplied with activation pressure from the first activation pressure passage 47 and is in the deactivated state when the activation pressure is released via the first activation pressure passage 47. In the activated state, the first air activation valve 46 controls the air bellows 23 in the air-supplied state by opening the bellows supply-discharge passage 45. In the deactivated state, the first air activation valve 46 controls the air bellows 23 in the air-discharged state by releasing the air bellows 23 to the atmosphere while stopping the supply of compressed air to the air bellows 23.

The first activation pressure passage 47 can connect the air supply source 41 and the first air activation valve 46 to each other, and the solenoid valve 35 is arranged on the first activation pressure passage 47. The solenoid valve 35 has a pressure-supplied state of supplying activation pressure to the first air activation valve 46 by opening the first activation pressure passage 47 and has a pressure-released state of releasing activation pressure to the first air activation valve 46 while stopping the supply of compressed air to the first air activation valve 46 via the first activation pressure passage 47. In the activated state in which power is supplied, the solenoid valve 35 is controlled in the pressure-supplied state. In the deactivated state in which the supply of power is stopped, the solenoid valve 35 is controlled in the pressure-released state. That is, the air bellows 23 are controlled in the air-supplied state when the solenoid valve 35 is in the pressure-supplied state, and the air bellows 23 are controlled in the air-discharged state when the solenoid valve 35 is in the pressure-released state.

The pneumatic circuit 40 includes a second supply-discharge passage 51, which can connect the first supply-discharge passage 42 to the pair of left and right second air springs 22, a second air activation valve 52, which is arranged on the second supply-discharge passage 51, and a second activation pressure passage 53, which can supply activation pressure to the second air activation valve 52.

The second supply-discharge passage 51 is connected to the connection point F, which is located between the ground clearance adjustment valve 43 of the first supply-discharge passage 42 and the first air springs 21, and connected to the pair of left and right second air springs 22. More specifically, the second supply-discharge passage 51 branches into two between the second air activation valve 52 and the pair of left and right second air springs 22, and the branched second supply-discharge passages 51 are connected to the pair of left and right second air springs 22. The second air activation valve 52 is in the activated state when supplied with activation pressure via the second activation pressure passage 53 and is in the deactivated state when activation pressure is released to the atmosphere via the second activation pressure passage 53. In the activated state, the second air activation valve 52 controls the second air spring 22 in the air-discharged state by stopping the supply of compressed air to the second air springs 22 and releasing the second air springs 22 to the atmosphere. In the deactivated state, the second air activation valve 52 controls the second air springs 22 in the air-supplied state by opening the second supply-discharge passage 51.

The second activation pressure passage 53 branches from a connection point G, which is located between the air bellows 23 and the first air activation valve 46 in the bellows supply-discharge passage 45. When the first air activation valve 46 is in the activated state, the second air activation valve 52 is supplied with activation pressure via the second activation pressure passage 53. When the first air activation valve 46 is in the deactivated state, the activation pressure on the second air activation valve 52 is released to the atmosphere via the second activation pressure passage 53.

That is, the second air springs 22 are controlled in the air-discharged state when the solenoid valve 35 is in the pressure-supplied state, and the second air spring 22 are controlled in the air-supplied state when the solenoid valve 35 is in the pressure-released state. In the air-supplied state, the second air springs 22 are connected to the first supply-discharge passage 42 via the second supply-discharge passage 51. In the same manner as the first air springs 21, the suppling and discharging of compressed air are controlled by the ground clearance adjustment valve 43 such that the ground clearance of the vehicle 10 is maintained at the set ground clearance.

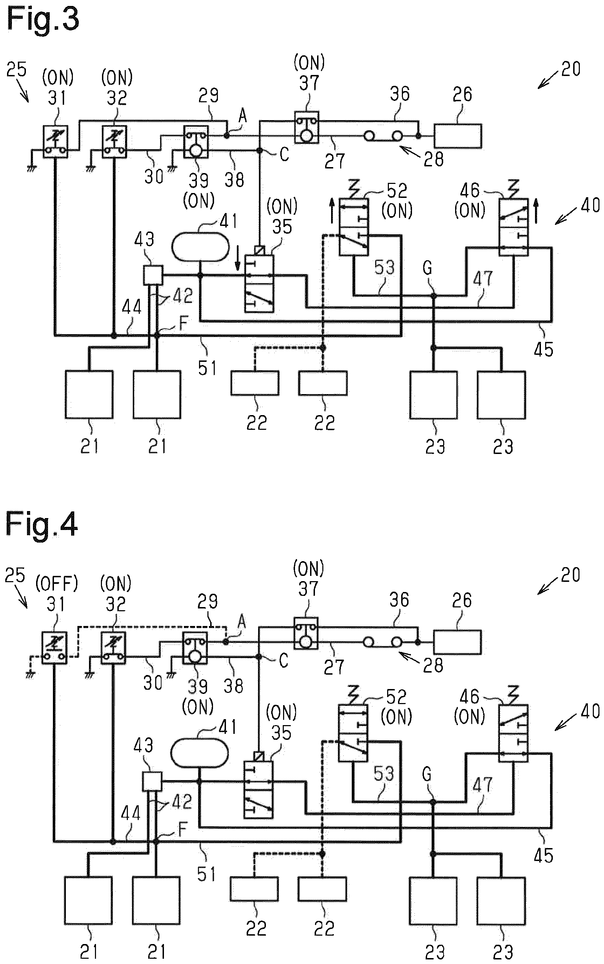

An example of the operation of the lift axle device 20 when the master switch 28 is on will now be described with reference to Figs. 3 to 6. In the following description, a state in which the pressure P is less than the first pressure P1 of the first switch 31 is referred to as a low-pressure state, a state in which the pressure P is greater than or equal to the second pressure P2 of the second switch 32 is referred to as a high-pressure state, and a state in which the pressure P is greater than or equal to the first pressure P1 and less than the second pressure P2 is referred to as a medium-pressure state. In Figs. 3 to 6, in the electrical circuitry configuring the control circuit 25, the electrical circuits in the energized state are shown by the fine solid lines, and the electrical circuits in the non-energized state are shown by the fine broken lines. Further, in the flow circuitry of the pneumatic circuit 40, the flow circuits supplied with compressed air are shown by the thick solid line, and the flow circuits released to the atmosphere are shown by the thick broken lines.

As shown in Fig. 3, when the pressure P is in the low-pressure state, the first switch 31 closes the first switch circuit 29 and the second switch 32 on the second switch circuit 30 is closed. When the first switch 31 closes the first switch circuit 29, the main control circuit 27 is set to the energized state by connecting the power supply 26 to ground and the first drive circuit 36 is closed by the first drive relay 37. Thus, supplying power from the power supply 26 to the solenoid valve 35 controls the solenoid valve 35 in the pressure-supplied state. When the solenoid valve 35 is controlled in the pressure-supplied state, the first air activation valve 46 and the second air activation valve 52 are both controlled in the activated state. When the second drive circuit 38 is set to the energized state, the second drive relay 39 is closed, thereby closing the second switch circuit 30. That is, when the pressure P is in the low-pressure state, the second air springs 22 are in the air-discharged state and the air bellows 23 are in the air-supplied state. Thus, the pneumatic circuit 40 is in a lift state, in which the second axle 15 is located at the lift position.

As shown in Fig. 4, when the pressure P changes from the low-pressure state to the medium-pressure state, the first switch 31 opens the first switch circuit 29 whereas the second switch 32 remains closed. Further, the second switch circuit 30 remains closed. That is, only the first switch circuit 29 changes from the state shown in Fig. 3 to the non-energized state, and the main control circuit 27 is maintained in the energized state by the second switch circuit 30. Thus, maintaining the energized state of the first drive circuit 36 maintains the solenoid valve 35 in the pressure-supplied state. This maintains the first air activation valve 46 and the second air activation valve 52 in the activated state. That is, the pneumatic circuit 40 maintains the lift state, in which the second axle 15 is located at the lift position, by maintaining the air-discharged states of the second air springs 22 and maintaining the air-supplied states of the air bellows 23 even if the pressure P changes from the low-pressure state to the medium-pressure state.

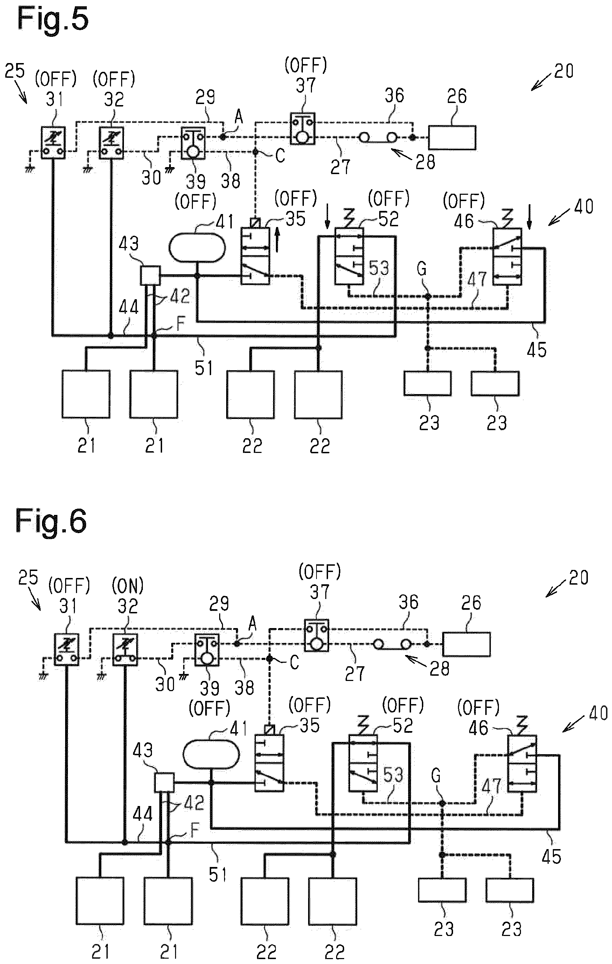

As shown in Fig. 5, when the pressure P changes from the medium-pressure state to the high-pressure state, the second switch 32 opens the second switch circuit 30. At this time, the second switch circuit 30 changes from the state shown in Fig. 4 to the non-energized state. Thus, the main control circuit 27 is set to the non-energized state, and the first drive relay 37 opens the first drive circuit 36. Opening the first drive circuit 36 sets the second drive circuit 38 to the non-energized state, thereby causing the second drive relay 39 to open the second switch circuit 30. Thus, since the supply of power to the solenoid valve 35 is stopped, the solenoid valve 35 is controlled in the pressure-released state. This controls the first air activation valve 46 in the deactivated state and controls the air bellows 23 in the air-discharged state. Further, controlling the first air activation valve 46 in the deactivated state stops the supply of activation pressure to the second activation pressure passage 53 and controls the second air activation valve 52 in the deactivated state. Thus, when the second supply-discharge passage 51 is opened, the second air springs 22 are controlled in the air-supplied state. That is, when the pressure P is in the high-pressure state, since the air bellows 23 are in the air-discharged state and the second air springs 22 are in the air-supplied state, the pneumatic circuit 40 is in a down state, in which the second axle 15 is located at the down position.

As shown in Fig. 6, when the pressure P changes from the high-pressure state to the medium-pressure state, the first switch 31 closes the first switch circuit 29 whereas the second switch 32 on the second switch circuit 30 is closed. That is, although the second switch 32 is closed from the state shown in Fig. 5, the second drive relay 39 still keeps the second switch circuit 30 open. Thus, the main control circuit 27 is maintained in the non-energized state. This maintains the pressure-released state of the solenoid valve 35. Thus, the deactivated states of the first air activation valve 46 and the second air activation valve 52 are maintained. That is, the pneumatic circuit 40 maintains the down state, in which the second axle 15 is located at the down position, by maintaining the air-discharged states of the air bellows 23 and the air-supplied states of the second air springs 22 even if the pressure P changes from the high-pressure state to the medium-pressure state.

In a case in which the pressure P changes from the medium-pressure state to the low-pressure state, when the first switch 31 closes the first switch circuit 29 and the solenoid valve 35 is controlled in the pressure-supplied state, the second air springs 22 are controlled in the air-discharged state and the air bellows 23 are controlled in the air-supplied state. As a result, the second axle 15 moves from the down position to the lift position.

When the master switch 28 is off, the supply of power to the solenoid valve 35 is stopped. Thus, since the solenoid valve 35 is maintained in the pressure-released state in the same manner as Figs. 5 and 6, the first air activation valve 46 and the second air activation valve 52 are maintained in the deactivated state. That is, the second axle 15 is located at the down position.

When the second axle 15 is located at the lift position, the load on the rear wheels corresponds to the first axle weight W1 on the first axle 13. When the second axle 15 is located at the down position, the load on the rear wheels corresponds to the total of the first axle weight W1 on the first axle 13 and a second axle weight W2 on the second axle 15.

As the difference between the first pressure P1 and the second pressure P2 increases, the frequency of the second axle 15 being lifted and lowered decreases. However, decreasing the first pressure P1, which moves the second axle 15 from the down position to the lift position, increases the difference but may easily cause the second axle 15 to remain at the down position even if, for example, unloading is finished and the load weight is reduced. Further, increasing the second pressure P2, which moves the second axle 15 from the lift position to the down position, increases the difference between the first pressure P1 and the second pressure P2 but may cause an excessive load to act on the first axle 13 when, for example, the second axle 15 is located at the lift position.

Thus, it is preferred that the first pressure P1 be set such that the second axle 15 be located at the lift position when the load weight is, for example, one-fifth to one-third of the maximum load weight. Further, it is preferred that the second pressure P2 be set such that an excessive load on the first axle 13 is prevented even if the vehicle 10 travels with the second axle 15 located at the lift position. Thus, it is preferred that the second pressure P2 be the same as or less than or equal to the pressure with which the second axle 15 is arranged at the down position and the ground clearance is controlled at a standard ground clearance when the vehicle is stopped, which is when the load weight is the maximum load weight.

Additionally, it is preferred that the second pressure P2 be greater than twice the first pressure P1 and less than or equal to three times the first pressure P1. In one example of the first pressure P1 and the second pressure P2, the second pressure P2 is 2.75 times the first pressure P1. More specifically, the first pressure P1 is 2.0 [kgf/^cm2], and the second pressure P2 is 5.5 [kgf/^cm2].

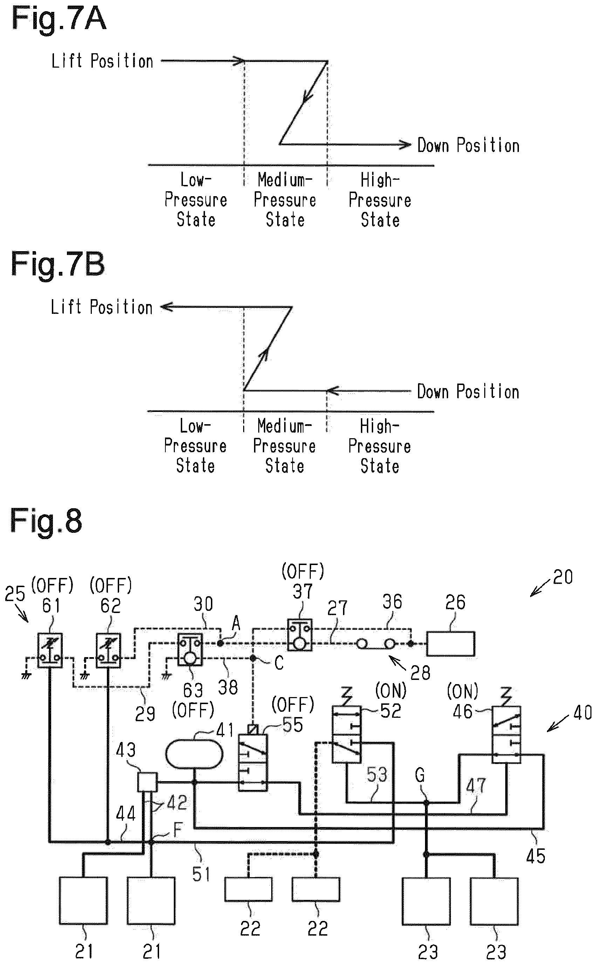

The lift axle device 20 of the above-described embodiment provides the following advantages.
(1) As shown in Fig. 7A, when the pressure P is in the low-pressure state and is changed from the low-pressure state to the medium-pressure state, the lift axle device 20 arranges the second axle 15 at the lift position. When the pressure P changes to the high-pressure state, the lift axle device 20 arranges the second axle 15 at the down position. Further, as shown in Fig. 7B, when the pressure P is in the high-pressure state and is changed from the high-pressure state to the medium-pressure state, the lift axle device 20 arranges the second axle 15 at the down position. When the pressure P changes to the low-pressure state, the lift axle device 20 arranges the second axle 15 at the lift position. Such a configuration is achieved by the control circuit 25 and the pneumatic circuit 40. The control circuit 25 includes the first switch 31 and the second switch 32 and switches the supply of power to the solenoid valve 35 between the state in which power is supplied and the state in which power is not supplied. The pneumatic circuit 40 is switched between the lift state and the down state by the solenoid valve 35. As a result, the frequency of lifting and lowering the second axle 15 can be reduced with a simple configuration. That is, when the solenoid valve 35 is supplied with power, the second axle 15 can be arranged at the lift position. Even when the pressure P of the first air spring 21 changes from the low-pressure state to the medium-pressure state to open the first switch circuit 29, the second switch circuit 30 is closed. Thus, the second axle remains at the lift position until the pressure P of the first air spring 21 reaches the high-pressure state. In addition, even when the pressure P of the first air spring 21 changes from the high-pressure state to the medium-pressure state to close the second pressure switch 32, the second drive relay 39 is open. This prevents the power supply 26 from being grounded. Thus, the second axle 15 remains at the down position until the pressure P of the first air spring 21 reaches the low-pressure state.
(2) The set pressure of the pressure switches (first switch 31 and second switch 32) can be set when the pressure switches are manufactured. Thus, there is no need to adjust the first pressure P1 and the second pressure P2 when the control circuit 25 is assembled. This improves the efficiency of assembling the control circuit 25 and consequently improves the efficiency of assembling the lift axle device 20. The set pressure of the first switch 31 and the set pressure of the second switch 32 are variable. This allows the second axle 15 to be lifted and lowered with the pressure suitable for a user, for example, when the load weight is always the same in an outbound trip and the load weight is always the same in a return trip in which unloading has been finished.
(3) In the lift axle device 20, the second axle 15 is lifted and lowered without, for example, using a sensor that detects the pressure of compressed air in the first air springs 21 or using an electronic control unit (ECU) that controls an actuator lifting and lowering the second axle with the detection value of the sensor. Thus, as compared to the configuration of using such a sensor or ECU, the cost of the lift axle device is reduced.
(4) The configuration in which the second axle 15 is located at the down position when the solenoid valve 35 is supplied with power, which differs from the present embodiment, needs a circuit that electrically connects the power supply 26 and the solenoid valve 35 to each other when the master switch 28 is off. In the present embodiment, in the lift axle device 20, whether the master switch 28 is on or off, the second axle 15 is arranged at the down position when the supply of power to the solenoid valve 35 is stopped. This reduces the power consumption of the power supply 26 when the master switch 28 is off while simplifying the control circuit 25.
(5) The control circuit 25 includes the master switch 28, which is interlocked with the operation unit 17. Such a configuration allows only the second axle 15 to be automatically lifted and lowered when the driver permits the second axle 15 to be lifted. That is, when the driver prohibits the second axle 15 from being lifted, the supply of power to the solenoid valve 35 is stopped to maintain the second axle 15 at the down position.
(6) In the pneumatic circuit 40, the second supply-discharge passage 51 is connected to the portion between the ground clearance adjustment valve 43 in the first supply-discharge passage 42 and the first air springs 21. Thus, when the second air springs 22 are in the air-supplied state, the pressure of the first air springs 21 and the pressure of the second air springs 22 can both be controlled by a single ground clearance adjustment valve 43. As a result, as compared to when the pressure of the first air springs 21 and the pressure of the second air springs 22 are independently controlled, the difference between the ground clearance at the first air springs 21 and the ground clearance at the second air springs 22 is reduced while simplifying the pneumatic circuit 40.
(7) In the lift axle device 20, the supplying and discharging of the second air springs 22 and the air bellows 23 are controlled by the corresponding air activation valves 46 and 52. The control subject of the control circuit 25 only needs to be a single solenoid valve 35. Thus, as compared to a configuration in which the control circuit 25 controls a solenoid valve corresponding to the second air springs 22 and another solenoid valve corresponding to the air bellows 23, the power consumption in the control circuit 25 can be reduced.
(8) In the pneumatic circuit 40, the solenoid valve 35 may be directly connected to the second activation pressure passage 53. However, in such a configuration, two passages, namely, the first activation pressure passage 47 and the second activation pressure passage 53, are connected to the solenoid valve 35. This makes the configuration of the solenoid valve 35 complicated. Additionally, the complicated configuration easily causes an anomaly in the solenoid valve 35. In the lift axle device 20, the second activation pressure passage 53 is connected to the passage of compressed air (bellows supply-discharge passage 45). This simplifies the configuration of the solenoid valve 35 while allowing the second air activation valve 52 to be supplied with activation pressure. As a result, an anomaly occurs in the solenoid valve 35 less often. This improves the reliability of the solenoid valve 35 and consequently improves the reliability of the lift axle device 20.
(9) The second activation pressure passage 53 is branched from the portion between the air bellows 23 and the first air activation valve 46 in the bellows supply-discharge passage 45 and connected to the second air activation valve 52. Such a configuration allows the second air activation valve 52 to be supplied with activation pressure via the bellows supply-discharge passage 45 when the first air activation valve 46 is supplied with activation pressure. Additionally, air can be smoothly discharged from the second air springs 22 by controlling the air bellows 23 in the air-supplied state and then controlling the second air springs 22 in the air-discharged state at a slightly later timing. Further, air can be smoothly supplied to the second air springs 22 by controlling the air bellows 23 in the air-discharged state and then controlling the second air springs 22 in the air-supplied state at a slightly later timing. When the first air activation valve 46 and the second air activation valve 52 are supplied with activation pressure, the second axle 15 can be arranged at the lift position. When the first air activation valve 46 and the second air activation valve 52 are not supplied with activation pressure, the second axle 15 can be arranged at the down position.

The above-described embodiment may be modified as follows.

The second activation pressure passage 53 may be, for example, branched from the first activation pressure passage 47 and connected to the second air activation valve 52. Such a configuration allows the first air activation valve 46 and the second air activation valve 52 to be supplied with activation pressure at the same timing.

In the pneumatic circuit 40, the second supply-discharge passage 51 does not have to be connected to the first supply-discharge passage 42. For example, the second supply-discharge passage 51 may be directly connected to the air supply source 41. In this case, the second supply-discharge passage 51 is provided with a ground clearance adjustment valve including a lever that is operated by a link rod coupled to the second axle 15.

The pneumatic circuit 40 may have a configuration in which the pneumatic circuit 40 includes a ground clearance sensor that detects the ground clearance, an electronically controlled ground clearance adjustment valve 43 that adjusts the supplying and discharging of compressed air to and from the air springs, and a control unit that controls the ground clearance adjustment valve based on the detection value of the ground clearance sensor. That is, the ground clearance of the vehicle 10 does not have to be mechanically controlled and may be electronically controlled.

The first air activation valve 46 and the second air activation valve 52 may be electromagnetic activation valves in which the supply of power is switched by the control circuit 25 between the state in which power is supplied and the state in which power is not supplied. In the control circuit 25 with such a configuration, a first solenoid valve corresponding to the first air activation valve 46 and a second solenoid valve corresponding to the second air activation valve 52 are connected in parallel to the power supply 26 via the first drive circuit 36. Further, the pneumatic circuit 40 does not include the solenoid valve 35, the first activation pressure passage 47, and the second activation pressure passage 53. The lift state and the down state are switched depending on whether the first solenoid valve and the second solenoid valve are supplied with power.

The lift axle device 20 does not have to include the master switch 28.

As shown in Fig. 8, in the lift axle device 20, the control circuit 25 may include a normally open pressure switch that keeps the electrical contact closed when the pressure of a measurement subject is greater than or equal to the set pressure. The pneumatic circuit 40 corresponding to such a control circuit 25 incorporates a solenoid valve 55, which arranges the second axle 15 at the down position when the second axle 15 is supplied with power. In Fig. 8, the same reference numerals are given to those components that are like or the same as the corresponding components of the above-described embodiment.

As shown in Fig. 8, the control circuit 25 includes a first switch 61, which is arranged on the first switch circuit 29, and a second switch 62, which is arranged on the second switch circuit 30. When the pressure P is greater than or equal to the first pressure P1, the first switch 61 is closed. When the pressure P is greater than or equal to the second pressure P2, the second switch 62 keeps the second switch circuit 30 closed. The control circuit 25 further includes a drive relay 63, which keeps the first switch circuit 29 (or main control circuit 27) closed when the second drive circuit 38 is in the energized state. In the activated state in which the solenoid valve 55 of the pneumatic circuit 40 is supplied with power from the control circuit 25, the solenoid valve 55 is controlled in the pressure-released state. In the deactivated state in which the supply of power to the solenoid valve 55 is stopped, the solenoid valve 55 is controlled in the pressure-supplied state.

For example, the control circuit 25 in Fig. 8 may also include a connection circuit that connects the power supply 26 and the solenoid valve 55 to each other when the master switch 28 is off. Such a configuration allows the second axle 15 to be located at the down position when the operation unit 17 is off.

In the lift axle device 20, one of the two pressure switches may be a normally open pressure switch, and the other one of the two pressure switches may be a normally closed pressure switch. In this case, a drive relay that closes a circuit in the energized state does not have to be used. Instead, a drive relay that closes a circuit in the non-energized state may be used.

The lift axle device 20 may include three axles or more. In such a case, the lift axle device 20 includes, for example, a control circuit and a pneumatic circuit that correspond to a third axle in addition to the control circuit 25 and the pneumatic circuit 40, which correspond to the second axle 15. In this case, instead of the second switch 32 in the control circuit 25, the control circuit includes a third switch of which the set pressure is set to a third pressure P3, which is higher than the second pressure P2. Further, instead of the second air springs 22 and the air bellows 23 in the pneumatic circuit 40, the pneumatic circuit includes third air springs and air bellows for the third axle.

## Claims

1. A lift axle device comprising:
a first air spring corresponding to a first axle to which a first drive wheel that remains on a ground surface is coupled;
a second air spring corresponding to a second axle configured to be lifted and lowered between a down position at which a second drive wheel is on the ground surface and a lift position at which the second drive wheel is separated from the ground surface;
an air bellows configured to lift and lower the second axle between the down position and the lift position;
a pneumatic circuit configured to supply and discharge compressed air to and from the second air spring and the air bellows, the pneumatic circuit including a solenoid valve, a position of the second axle being switched depending on whether power is supplied to the solenoid valve; and
a control circuit including a first electrical contact and a second electrical contact that are opened and closed in accordance with pressure of the first air spring, wherein
the first electrical contact is configured to be switched between an open state and a closed state at a first pressure of the first air spring,
the second electrical contact is configured to be switched between an open state and a closed state at a second pressure of the first air spring that is higher than the first pressure,
the control circuit is configured to control supply of power to the solenoid valve by switching the first electrical contact and the second electrical contact between the open state and the closed state in accordance with the pressure of the first air spring, and
the control circuit is configured to control the supply of power to the solenoid valve such that
when the pressure changes to be less than the first pressure, the second air spring is controlled in an air-discharged state and the air bellows is controlled in an air-supplied state to arrange the second axle at the lift position,
when the pressure changes to be greater than or equal to the second pressure, the second air spring is controlled in the air-supplied state and the air bellows is controlled in the air-discharged state to arrange the second axle at the down position, and
when the pressure changes to be greater than or equal to the first pressure and less than the second pressure, each of the states of the second air spring and the air bellows is maintained in the air-supplied state or the air-discharged state to keep the second axle.

2. The lift axle device according to claim 1, wherein
the control circuit includes
a main control circuit connected to a power supply,
a first pressure switch including the first electrical contact,
a second pressure switch including the second electrical contact,
a first switch circuit configured to connect the power supply to ground via the main control circuit, the first switch circuit including the first pressure switch,
a second switch circuit configured to connect the power supply to ground via the main control circuit, the second switch circuit including the second pressure switch,
a first drive circuit configured to connect the power supply and the solenoid valve to each other,
a first drive relay configured to close the first drive circuit when the main control circuit is in an energized state,
a second drive circuit that branches from a portion between the solenoid valve and an electrical contact of the first drive relay in the first drive circuit, the second drive circuit being configured to connect the power supply to ground via the first drive circuit, and
a second drive relay including an electrical contact arranged on the second switch circuit, the electrical contact of the second drive relay being closed when the second drive circuit is in the energized state,
the solenoid valve is configured to control the second air spring in the air-discharged state and control the air bellows in the air-supplied state when the solenoid valve is supplied with power from the power supply,
the first pressure switch is configured to close the first electrical contact when the pressure is less than the first pressure, and
the second pressure switch is configured to close the second electrical contact when the pressure is less than the second pressure.

3. The lift axle device according to claim 2, wherein
the control circuit includes a master switch configured to open and close the main control circuit, and
the master switch is configured to close the main control circuit when a state of an operation unit operated by a driver indicates that the second axle is permitted to be lifted.

4. The lift axle device according to any one of claims 1 to 3, wherein the pneumatic circuit includes
a first supply-discharge passage configured to connect the first air spring and an air supply source to each other,
a ground clearance adjustment valve arranged on the first supply-discharge passage, the ground clearance adjustment valve controlling supplying and discharging of compressed air to and from the first air spring such that a ground clearance becomes a set ground clearance,
a second supply-discharge passage that branches from a portion between the ground clearance adjustment valve and the first air spring in the first supply-discharge passage, the second supply-discharge passage being connected to the second air spring,
a bellows supply-discharge passage configured to connect the air supply source and the air bellows to each other,
a first air activation valve arranged on the bellows supply-discharge passage, the first air activation valve having an activated state in which supply of compressed air to the air bellows is permitted and a deactivated state in which the supply of compressed air to the air bellows is stopped and the air bellows is released to the atmosphere,
a first activation pressure passage configured to connect the air supply source and the first air activation valve to each other, the first activation pressure passage being configured to be selectively switched by the solenoid valve between a state in which supply of activation pressure to the first air activation valve is permitted and a state in which the activation pressure of the first air activation valve is released,
a second air activation valve arranged on the second supply-discharge passage, the second air activation valve having a deactivated state in which supply of compressed air to the second air spring is permitted and an activated state in which the supply of compressed air to the second air spring is stopped and the second air spring is released to the atmosphere, and
a second activation pressure passage connected to the second air activation valve, the second activation pressure passage being configured to permit supply of activation pressure to the second air activation valve in a state in which activation pressure is supplied to the first air activation valve and release the activation pressure of the second air activation valve in a state in which the activation pressure of the first air activation valve is released.

5. The lift axle device according to claim 4, wherein the second activation pressure passage is branched from a portion between the first air activation valve and the air bellows in the bellows supply-discharge passage and connected to the second air activation valve.
